(19) Europäisches Patentamt
European Patent Office
Office européen des brevets

(11) Veröffentlichungsnummer: **0 017 781 B1**

# (12) EUROPÄISCHE PATENTSCHRIFT

(45) Veröffentlichungstag der Patentschrift: **04.11.81**

(51) Int. Cl.³: **C 08 L 83/04**, C 08 K 9/06

(21) Anmeldenummer: **80101444.0**

(22) Anmeldetag: **20.03.80**

(54) **Zu Elastomeren vernetzbare Organopolysiloxanmassen.**

(30) Priorität: **22.03.79 DE 2911352**

(43) Veröffentlichungstag der Anmeldung: **29.10.80 Patentblatt 80/22**

(45) Bekanntmachung des Hinweises auf die Patenterteilung: **04.11.81 Patentblatt 81/44**

(84) Benannte Vertragsstaaten: **DE FR GB IT**

(56) Entgegenhaltungen:
**FR-A- 2 221 491**
**US-A- 4 075 154**

(73) Patentinhaber: **WACKER-CHEMIE GMBH, Prinzregentenstrasse 22, D-8000 München 22 (DE)**

(72) Erfinder: **Patzke, Jörg, Dr. Dipl.-Chem., Marienberger Strasse 41, D-8263 Burghausen (DE)**
Erfinder: **Wegehaupt, Karl-Heinrich, Dr., Marktler Strasse 78, D-8263 Burghausen (DE)**

**EP 0 017 781 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Zu Elastomeren vernetzbare Organopolysiloxanmassen

Mittels organischer peroxydischer Verbindungen zu Elastomeren vernetzbare Massen auf Grundlage von Diorganopolysiloxan, die als mindestens einen Zusatz Bariumperoxyd, Bariumoxyd oder Magnesiumoxyd, also ebenso wie die erfindungsgemäßen Massen einen basischen anorganischen Feststoff, enthalten, sind bereits bekannt. Hierzu sei verwiesen auf z. B. US-PS 3 261 801, W. J. Wormuth, General Electric Company, ausgegeben: 19. Juli 1966, US-PS 3 468 838, N. G. Loraine et al., George Angus Company Limited, ausgegeben: 23. September 1969, und US-PS 3 865 778, G. Christie, General Electric Company, ausgegeben: 11. Februar 1975. Es sind auch bereits mittels organischer peroxydischer Verbindungen zu Elastomeren vernetzbare Massen auf Grundlage von Diorganopolysiloxan bekannt oder zumindest naheliegend, die als mindestens einen Zusatz mindestens einen basischen anorganischen Feststoff enthalten, von dem zumindest anzunehmen ist, daß er durch Behandlung mit Organosiliciumverbindung hydrophobiert ist. Hierzu sei verwiesen auf z. B. US-PS 3 004 859, H. K. Lichtenwallner, General Electric Company, ausgegeben: 17. Oktober 1961, DE-AS 1 141 082, Dow Corning AG, ausgegeben: 13. Dezember 1962, und GB-PS 1 132 853, Midland Silicones Limited, ausgegeben: 6. November 1968. Es ist jedoch bisher noch von keiner dieser bekannten Massen bekanntgeworden, daß sie ebenso wie die erfindungsgemäßen mittels organischer peroxydischer Verbindungen zu Elastomeren vernetzbaren Massen auf Grundlage von Diorganopolysiloxan, die ebenfalls mindestens einen durch Behandlung mit Organosiliciumverbindung hydrophobierten, basischen anorganischen Feststoff enthalten, Elastomere ergeben, die nach Erhitzen in Gegenwart von Luft einen besonders niedrigen Druckverformungsrest (englisch: compression set) aufweisen, und die mit dieser Eigenschaft auch eine erhöhte Beständigkeit gegenüber Erhitzen unter Ausschluß von Luft, was der Fachmann als »Reversionsbeständigkeit im geschlossenen System« bezeichnet, und erhöhte Beständigkeit gegenüber heißen, flüssigen, gegebenenfalls teilweise oxydierten, flüssigen Kohlenwasserstoffen und anderen heißen Motorölen verbinden.

Gegenstand der Erfindung sind mittels organischer peroxydischer Verbindungen zu Elastomeren vernetzbare Massen auf Grundlage von Diorganopolysiloxan, die durch Behandlung mit Organosiliciumverbindungen hydrophobierte, basische anorganische Feststoffe enthalten, wobei mindestens ein Teil des mit Organosiliciumverbindungen hydrophobierten, basischen Feststoffs mit Organosiliciumverbindungen hydrophobiertes Calciumhydroxyd ist.

Die Tatsache der Erhöhung der Reversionsbeständigkeit im geschlossenen System der aus den erfindungsgemäßen Massen hergestellten Elastomeren durch das erfindungsgemäß verwendete Calciumhydroxyd ist überraschend. Es war nämlich aus der oben bereits erwähnten US-PS 3 261 801 bekannt, daß Calciumoxyd, also ein basischer anorganischer Feststoff, der Calciumhydroxyd eng verwandt ist, in Organopolysiloxanelastomeren deren Eigenschaften beim Erhitzen verschlechtert.

Als Diorganopolysiloxane können auch im Rahmen der Erfindung alle Diorganopolysiloxane verwendet werden, die bisher als Grundlage für mittels organischer peroxydischer Verbindungen zu Elastomeren vernetzbaren Massen auf Grundlage von Diorganopolysiloxanen verwendet werden konnten. Sie sind vorzugsweise solche, die vielfach durch Formeln, wie

$$Z_nSiR_{3-n}O(SiR_2O)_xSiR_{3-n}Z_n,$$

wiedergegeben werden. In dieser Formel bedeutet R gleiche oder verschiedene, einwertige, gegebenenfalls substituierte Kohlenwasserstoffreste, Z eine Hydroxylgruppe, n 0 oder 1 und x eine Zahl im Wert von mindestens 100. In den einzelnen Molekülen der oben angegebenen Formel können auch die Werte für n bei gleichen Molekülen oder bei verschiedenen Molekülen gleich oder verschieden sein. Ebenso können die Werte für x verschieden sein.

Innerhalb bzw. entlang der Siloxankette in der oben angegebenen Formel können, was durch derartige Formeln üblicherweise nicht dargestellt wird, zusätzlich zu den Diorganosiloxaneinheiten ($SiR_2O$) andere, meist jedoch nur als mehr oder weniger schwer vermeidbare Verunreinigungen vorliegende Siloxaneinheiten vorhanden sein. Beispiele für derartige andere Siloxaneinheiten sind insbesondere solche der Formeln $RSiO_{3/2}$, $R_3SiO_{1/2}$, und $SiO_{4/2}$, wobei R jeweils die oben dafür angegebene Bedeutung hat. Die Menge an derartigen anderen Siloxaneinheiten als Diorganosiloxaneinheiten beträgt jedoch vorzugsweise höchstens 1 Molprozent vom zu vernetzenden Diorganopolysiloxan.

Beispiele für Kohlenwasserstoffreste R sind Alkylreste, wie der Methyl-, Äthyl-, n-Propyl- und Isopropylrest sowie Octadecylreste; Alkenylreste, wie der Vinyl-, Butadienyl- und Allylrest; cycloaliphatische Kohlenwasserstoffreste, wie der Cyclopentyl- und Cyclohexylrest sowie Cyclohexenyl- und Methylcyclohexylreste; Arylreste, wie der Phenylrest; Aralkylreste, wie der Benzyl- und beta-Phenyläthylrest; sowie Alkarylreste, wie Tolylreste.

Beispiele für substituierte Kohlenwasserstoffreste R sind insbesondere halogenierte Kohlenwasserstoffreste, wie der 3,3,3-Trifluorpropylrest sowie Chlorphenylreste und Bromtolylreste; ferner Cyanalkylreste, wie der beta-Cyanäthylrest.

Wegen der leichteren Zugänglichkeit sind vorzugsweise mindestens 80% der Anzahl der Reste R Methylreste. Die zusätzlich zu den Methylresten vorhandenen Reste R sind insbesondere Vinyl- und/oder Phenylgruppen. Um Elastomere mit besonders guten physikalischen Eigenschaften, z. B. hoher Zugfestigkeit, zu erhalten, ist es jedoch bevorzugt, daß bei dem die Grundlage der Masse bildenden Diorganopolysiloxan bei 0,01 bis 1 Molprozent der Siloxaneinheiten einer der Reste R eine Vinylgruppe ist.

Der Wert von x ist vorzugsweise so hoch, daß die Viskosität vom die Grundlage der Massen bildenden Diorganopolysiloxan mindestens $10^6$ mPa · s bei 25°C beträgt oder die Plastizität vom die Grundlage der Massen bildenden Diorganopolysiloxan bei der Bestimmung mittels des Brabender-Plastographen bei 25°C und 60 Umdrehungen je Minute einen Wert von 500 bis 10 000, vorzugsweise 1500 bis 8000 J hat.

Mit Organosiliciumverbindungen hydrophobiertes Calciumhydroxyd ist bereits bekannt und im Handel erhältlich. Es kann beispielsweise dadurch hergestellt werden, daß man Calciumoxyd mit einer Emulsion von Organopolysiloxan, das durchschnittlich 0,8 bis 2,1, insbesondere 0,9 bis 1,8, SiC-gebundene Kohlenwasserstoffreste, insbesondere Methylreste, je Siliciumatom in Wasser umsetzt und die so erhaltenen Produkte, wenn sie noch nicht pulverförmig sind, trocknet und erforderlichenfalls mahlt. Derartige Verfahren zur Herstellung von mit Organosiliciumverbindung hydrophobiertem Calciumhydroxyd sind beispielsweise aus GB-PS 1 217 813, Wacker-Chemie GmbH, veröffentlicht: 31. Dezember 1970 und entsprechend FR-PS 2 010 092, und aus FR-PS 2 341 635, Wacker-Chemie GmbH, ausgegeben: 23. Oktober 1978, bekannt.

Mit Organosiliciumverbindungen hydrophobiertes Calciumhydroxyd kann aber auch durch Umsetzung der Oberfläche von Calciumhydroxyd mit einer beliebigen, anorganische Stoffe hydrophob machenden Organosiliciumverbindung in Abwesenheit von Wasser in Mengen (des Wassers), welche 10 Gewichtsprozent, bezogen auf hydrophob machende Organosiliciumverbindung, übersteigen, erfolgt sein. Beispiele für bei einer Umsetzung der letzteren Art einsetzbare Organosiliciumverbindungen sind insbesondere solche der allgemeinen Formel

$(R_3Si)_aX$ oder $R_aSiX'_{4-a}$,

worin R die oben dafür angegebene Bedeutung hat, X und X' jeweils Halogen, Wasserstoff oder einen Rest der Formel $-OH$, $-OR'$, $-NR'Y$, $-ONR'_2$, $-SR'$ oder $-OOCR'$ bedeutet, wobei R' ein gegebenenfalls substituierter Alkylrest mit 1 bis 4 Kohlenstoffatomen und Y Wasserstoff ist oder die gleiche Bedeutung wie R' hat, und a 1 oder 2 ist, wobei X jedoch auch $-O-$, $-N(X)-$ oder $-S-$ bedeuten kann, wenn a 2 ist, sowie Octamethylcyclotetrasiloxan und/oder in den endständigen Einheiten je eine Si-gebundene Hydroxylgruppe aufweisende Dimethylpolysiloxane mit 2 bis 12 Siloxaneinheiten je Molekül.

Alle obigen Ausführungen und Beispiele für SiC-gebundene, gegebenenfalls substituierte Kohlenwasserstoffreste im die Grundlage der Massen bildenden Diorganopolysiloxan gelten im vollen Umfang auch für die Reste R in den oben angegebenen Formeln für hydrophob machende Organosiliciumverbindungen.

Beispiele für Halogenatome X und X' sind Chlor, Brom und Jod, wobei Chlor insbesondere wegen der leichten Zugänglichkeit bei weitem am wichtigsten ist.

Beispiele für Kohlenwasserstoffreste R' sind insbesondere der Methyl- und Äthylrest. Weitere Beispiele für Kohlenwasserstoffreste R' sind der unten folgenden Aufzählung von hydrophob machenden Organosiliciumverbindungen zu entnehmen.

Als Beispiele für substituierte Kohlenwasserstoffreste R' seien der Methoxyäthylen- und der Aminoäthylrest genannt.

Einzelne Beispiele für hydrophob machende Organosiliciumverbindungen der oben angegebenen Formeln sind Hexamethyldisilazan, Trimethyläthoxysilan, Trimethylsilan, Trimethylchlorsilan, Dimethyldiäthoxysilan, Trimethylsilylmerkaptan, Vinyldimethylacetoxysilan, Trimethylsilylisopropylamin, Trimethylsiläthylamin, Phenyldimethylsilylpropylamin, Vinyldimethylsilylbutylamin, Diäthylaminoxytrimethylsilan, Diäthylaminoxyphenyldimethylsilan, Hexamethyldisiloxan, 1,3-Divinyl-1,1,3,3-tetramethyldisiloxan, 1,1-Diphenyl-1,1,3,3-tetramethyldisilazan, Diphenyldiäthoxysilan, Dimethyldichlorsilan, Dimethyldimethoxysilan, Vinylmethyldimethoxysilan und Methyltriäthoxysilan.

Es können auch Gemische aus verschiedenen Organosiliciumverbindungen für die Hydrophobierung von Calciumhydroxyd verwendet worden sein.

Unabhängig davon, ob bei der Herstellung von mit Organosiliciumverbindungen hydrophobiertem Calciumhydroxyd Wasser mitverwendet wird oder nicht, wird bei dieser Herstellung die hydrophob machende Organosiliciumverbindung vorzugsweise in Mengen von 5 bis 150 Gewichtsprozent, bezogen auf das Gewicht von Calciumhydroxyd bzw. Calciumoxyd, eingesetzt

Die Umsetzung der Oberfläche von Calciumhydroxyd mit hydrophob machenden Organosiliciumverbindungen in Abwesenheit von Wassermengen, welche 10 Gewichtsprozent, bezogen auf hydrophob machende Organosiliciumverbindung übersteigen, kann auf jede beliebige Weise erfolgt sein, nach der auch bisher die Oberfläche von bei Raumtemperatur festen anorganischen Stoffen mit einem Teilchendurchmesser von weniger als 10 mm mit Organosiliciumverbindungen umgesetzt

werden konnte. Somit kann z. B. für die Durchführung dieser Umsetzung ein Gemisch aus Calciumhydroxyd und bei Raumtemperatur bei 1 bar verdampfender, hydrophobierender Organosiliciumverbindung in einem verschlossenen Behälter, wie einem Polyäthylensack, mindestens 10 Tage stehen gelassen werden.

Die erfindungsgemäßen Massen enthalten, bezogen auf das Gesamtgewicht der jeweiligen Masse, mit Organosiliciumverbindungen hydrophobiertes Calciumhydroxyd vorzugsweise in Mengen von 0,1 bis 20 Gewichtsprozent.

Die erfindungsgemäßen Massen können mittels beliebiger organischer peroxydischer Verbindungen vernetzt werden, die auch bisher zur Vernetzung von Massen auf Grundlage von Diorganopolysiloxan zu Elastomeren eingesetzt werden konnten. Beispiele für solche peroxydische Verbindungen sind Acylperoxyde, wie Dibenzoylperoxyd, Bis-(4-chlorbenzoyl)-peroxyd und Bis-(2,4-dichlorbenzoyl)-peroxyd; Alkylperoxyde und Arylperoxyde, wie Di-tert.-butylperoxyd und Dicumylperoxyd; Perketale, wie 2,5-Bis-(tert.-butylperoxy)-2,5-dimethylhexan; Perester, wie Diacetylperoxydicarbonat, tert.-Butylperbenzoat, tert.-Butylperoxyisopropylcarbonat und tert.-Butylperisononanoat; ferner tert.-Butyl-beta-hydroxyläthylperoxyd.

Selbstverständlich können die erfindungsgemäßen Massen zusätzlich zu den die Grundlage der Massen bildenden Diorganopolysiloxan und dem mit Organosiliciumverbindungen hydrophobierten Calciumhydroxyd sowie gegebenenfalls bereits eingemischter organischer peroxydischer Verbindung Zusätze enthalten, die auch bisher zusätzlich zu bei der Bereitung entsprechender Massen eingesetzt werden konnten. Beispiele für derartige Zusätze sind verstärkende Füllstoffe, nicht verstärkende Füllstoffe, Mittel zur Verhinderung der Verstrammung der Massen beim Lagern, wie niedermolekulare Siloxanole oder Alkoxysilane, Pigmente, Antioxydantien, andere Zusätze zur Verminderung des Druckverformungsrests als mit Organosiliciumverbindungen hydrophobiertes Calciumhydroxyd, Hitzestabilisatoren, Weichmacher, wie durch Trimethylsiloxygruppen endblockiertes Dimethylpolysiloxan mit einer Viskosität von etwa 100 mPa · s bei 25° C, flammabweisend machende Mittel, Lichtschutzmittel, die elektrischen Eigenschaften der Elastomeren in gewünschter Weise beeinflussende Mittel, wie leitfähiger Kohlenstoff, und zellenerzeugende Mittel, wie Azodicarbonamid.

Beispiele für verstärkende Füllstoffe, also für Füllstoffe mit einer Oberfläche von mindestens 50 $m^2/g$ (bestimmt nach der BET-Methode), sind pyrogen erzeugte Siliciumdioxyde, unter Erhaltung der Struktur entwässerte Kieselsäure-Hydrogele und andere Arten von gefälltem Siliciumdioxyd mit einer Oberfläche von mindestens 50 $m^2/g$ und Metalloxyde, wie Titandioxyd, Ferrioxyd, Aluminiumoxyd und Zinkoxyd, soweit sie jeweils eine Oberfläche von mindestens 50 $m^2/g$ aufweisen.

Beispiele für nicht verstärkende Füllstoffe, also für Füllstoffe mit einer Oberfläche von weniger als 50 $m^2/g$ (bestimmt nach der BET-Methode), sind Quarzmehl, Diatomeenerde, Neuburger Kreise, Calciumsilikat, Magnesiumoxyd, Magnesiumsilikat, Zirkoniumsilikat, Calciumcarbonat, z. B. in Form von gemahlener Kreise, und calciniertes Aluminiumsilikat.

Auch alle obengenannten Füllstoffe können hydrophobiert sein, beispielsweise durch Behandlung mit Trimethyläthoxysilan. Falls erwünscht, kann diese Behandlung ebenso wie übrigens auch die Herstellung des hydrophobierten Calciumhydroxyds z. B. in einer Kugelmühle durchgeführt worden sein.

Zur Bereitung der erfindungsgemäßen Massen können alle Bestandteile der jeweiligen Masse in beliebiger Reihenfolge miteinander vermischt werden. Dieses Vermischen wird vorzugsweise bei Temperaturen im Bereich von 0 bis 200° C durchgeführt. Die organische peroxydische Verbindung wird jedoch vorzugsweise als letzter Bestandteil und bei Temperaturen bei denen sich die jeweils verwendete organische peroxydische Verbindung nicht allzu rasch zersetzt, mit der Mischung der übrigen Bestandteile vermischt.

Die Vernetzung der erfindungsgemäßen Massen kann bei den für die Vernetzung entsprechender Massen üblichen Temperaturen und Drücken erfolgen, insbesondere bei Temperaturen im Bereich von 100 bis 220° C.

Die erfindungsgemäßen Massen können überall verwendet werden, wo entsprechende Elastomere vorteilhaft sind, insbesondere wo gute mechanische Eigenschaften auch bei Temperaturen über 50° C über längere Zeit benötigt werden, z. B. zur Herstellung von Elektroisolierungen, insbesondere bei Kabeln, die vor der Nachhärtung durch Erwärmen, was der Fachmann als »Tempern« bezeichnet, aufgerollt werden, und zur Herstellung von Dichtungen und Schläuchen, die heißen Kohlenwasserstoffen oder anderen Motorölen ausgesetzt sind, sowie zur Herstellung von anderen elektrisch leitenden oder nicht elektrisch leitenden Formkörpern.

In den folgenden Beispielen beziehen sich alle Angaben von Teilen und Prozentsätzen auf das Gewicht, soweit nichts anderes angegeben ist. Oberflächengrößen von Siliciumdioxyd wurden jeweils nach der BET-Methode bestimmt.

Das in den folgenden Beispielen verwendete, mit Organosiliciumverbindungen hydrophobierte Calciumhydroxyd wurde hergestellt wie folgt:

Die zwischen 100 und 150° C bei 1 bar siedenden Produkte der Umsetzung von Methylchlorid mit Silicium bei der Direktsynthese von Methylchlorsilanen nach Rochow wurden in Wasser gegossen. Die dabei erhaltene ölige Phase wird in der gleichen Menge Wasser, das 1 Gewichtsprozent

Polyvinylalkohol mit restlichen Acetylgruppen (Verseifungszahl, d. h. mg KOH, erforderlich zur Abspaltung der restlichen Acetylgruppen und Neutralisation der bei dieser Abspaltung gebildeten Essigsäure in 1 g des Polyvinylalkohols: 140; Viskosität, gemessen in 4 gewichtsprozentiger wäßriger Lösung bei 20° C: 25 mPa · s) enthält, emulgiert. 50 g der so erhaltenen wäßrigen Emulsion wurden mit 5 g Wasser, 2 g Natriumlaurylsulfat und 50 g Calciumoxyd in Form von pulverförmigem Branntkalk vermischt. Es wurde mit Organosiliciumverbindungen hydrophobiertes Calciumhydroxyd in Form eines Pulvers mit einem Gehalt an freiem Wasser von 0,75 bis 1,1 Gewichtsprozent erhalten.

## Beispiel 1

In jeweils 100 Teile eines durch Trimethylsiloxygruppen entblockierten Diorganopolysiloxans aus 99,5 Molprozent Dimethylsiloxaneinheiten und 0,5 Molprozent Vinylmethylsiloxaneinheiten mit einer im Brabender-Plastograph bei 25° C und 60 Umdrehungen je Minute bestimmten Plastizität von 6370 J werden auf einem Labor-Zweiwalzengerät zunächst 8 Teile eines in den endständigen Einheiten je eine Si-gebundene Hydroxylgruppe aufweisenden Dimethylpolysiloxans mit 4% Hydroxylgruppen, dann 48 Teile eines pyrogen erzeugten Siliciumdioxyds mit einer Oberfläche von 130 $m^2/g$, dann 48 Teile Diatomeenerde und schließlich 2 g des mit Organosiliciumverbindungen hydrophobierten Calciumhydroxyds eingemischt. In je 100 Teile der so erhaltenen Mischung wird jeweils eine der in Tabelle I angegebenen organischen peroxydischen Verbindungen in den in Tabelle I angegebenen Mengen eingemischt. Die so erhaltenen Massen werden unter den in Tabelle I ebenfalls angegebenen Bedingungen zu Elastomeren vernetzt, welche nach dieser Vernetzung bzw. nach 4 Stunden Erwärmen an der Luft auf 200° C die in Tabelle I angegebenen Eigenschaften haben.

## Vergleichsversuch a

Die in Beispiel 1 beschriebene Arbeitsweise wird wiederholt mit der Abänderung, daß kein mit Organosiliciumverbindungen hydrophobiertes Calciumhydroxyd mitverwendet wird. Die Ergebnisse sind ebenfalls in Tabelle I angegeben.

Tabelle I

| | 1 Teil | | | | 1,5 Teile | | | | 0,6 Teile | | | |
|---|---|---|---|---|---|---|---|---|---|---|---|---|
| | Dibenzoylperoxyd[1]) | | | | Bis-(2,4-dichlorbenzoyl)-peroxyd[1]) | | | | Dicumylperoxyd[2]) | | | |
| | Vernetzungszeit: 10 Minuten<br>Vernetzungstemp.: 135°C | | | | Vernetzungszeit: 10 Minuten<br>Vernetzungstemp.: 135°C | | | | Vernetzungszeit: 15 Minuten<br>Vernetzungstemp.: 165°C | | | |
| | Beispiel 1 | | Vergleichs-versuch a | | Beispiel 1 | | Vergleichs-versuch a | | Beispiel 1 | | Vergleichs-versuch a | |
| | 4) | 5) | 4) | 5) | 4) | 5) | 4) | 5) | 4) | 5) | 4) | 5) |
| Shore-A-Härte | 73 | 82 | 76 | 84 | 66 | 77 | 68 | 80 | 74 | 82 | 78 | 86 |
| Zugfestigkeit $N/mm^2$ | 5,4 | 6,5 | 5,2 | 7,0 | 5,0 | 6,0 | 5,1 | 6,8 | 5,2 | 6,4 | 5,3 | 6,1 |
| Bruchdehnung % | 220 | 140 | 190 | 130 | 310 | 210 | 290 | 160 | 150 | 120 | 170 | 120 |
| Weiterreißfestigkeit N/mm | 11,5 | 11,5 | 10,2 | 10,3 | 13,2 | 14,7 | 13,3 | 10,8 | 15,0 | 12,1 | 10,3 | 11,6 |
| Druckverformungsrest %[3]) | 27,9 | 23,4 | 76,8 | 42,5 | 35,5 | 20,5 | 100,0 | 58,5 | 18,4 | 13,5 | 23,6 | 14,4 |

[1]) Paste aus gleichen Teilen Peroxyd und eine Viskosität von 250 mPa · s bei 25°C aufweisendem, durch Trimethylsiloxygruppen entblockiertem Dimethylpolysiloxan.

[2]) 95%ig.

[3]) bestimmt nach 22 Stunden Erwärmen an der Luft auf 175°C.

[4]) bestimmt vor dem 4 Stunden Erwärmen an der Luft auf 200°C.

[5]) bestimmt nach dem 4 Stunden Erwärmen an der Luft auf 200°C.

Beispiel 2

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa · s bei 25° C werden in einem bei 120° C betriebenen Kneter zunächst mit 8 Teilen eines in den endständigen Einheiten je eine Si-gebundene Hydroxylgruppe aufweisenden Dimethylpolysiloxans mit 4% Hydroxylgruppen und dann mit 36 Teilen eines pyrogen erzeugten Siliciumdioxyds mit einer Oberfläche von 200 $m^2/g$ vermischt. In 100 Teile der so erhaltenen Mischung werden nach dem Abkühlen zunächst 10 Teile Diatomeenerde, dann 4 Teile des mit Organosiliciumverbindungen hydrophobierten Calciumhydroxyds und schließlich 1,5 Teile eines Gemisches aus 40% Dicumylperoxyd und 60% Kreise eingemischt. Die so erhaltene Masse wird durch 15 Minuten Erwärmen auf 165° C zu einem Elastomeren vernetzt, welches nach dieser Vernetzung bzw. nach 4 Stunden Erwärmen auf 200° C an der Luft die in Tabelle II angegebenen Eigenschaften hat.

Vergleichsversuch b

Die in Beispiel 2 beschriebene Arbeitsweise wird wiederholt mit der Abänderung, daß kein mit Organosiliciumverbindungen hydrophobiertes Calciumhydroxyd mitverwendet wird. Die Ergebnisse sind ebenfalls in Tabelle II angegeben.

Tabelle II

| | Beispiel 2 | | Vergleichsversuch b | |
|---|---|---|---|---|
| | 1) | 2) | 1) | 2) |
| Shore-A-Härte | 46 | 46 | 47 | 47 |
| Zugfestigkeit $N/mm^2$ | 8,0 | 8,5 | 8,1 | 8,3 |
| Bruchdehnung % | 730 | 680 | 680 | 650 |
| Druckverformungsrest %[3]) | 17,7 | 12,2 | 30,1 | 19,8 |

[1]) bestimmt vor dem 4 Stunden Erwärmen an der Luft auf 200°C.

[2]) bestimmt nach dem 4 Stunden Erwärmen an der Luft auf 200°C.

[3]) bestimmt nach 22 Stunden Erwärmen an der Luft auf 175°C.

Beispiel 3

a) 100 Teile eines durch Trimethylsiloxygruppen endblockierten Diorganopolysiloxans aus 99,9 Molprozent Dimethylsiloxaneinheiten und 0,1 Molprozent Vinylmethylsiloxaneinheiten mit einer im Brabender-Plastograph bei 25° C und 60 Umdrehungen je Minute bestimmten Plastizität von 5880 J werden zunächst mit 3 Teilen eines in den endständigen Einheiten je eine Si-gebundene Hydroxylgruppe aufweisenden Dimethylpolysiloxans, wobei der Anteil der Si-gebundenen Hydroxylgruppen 3% beträgt, dann 6 Teilen eines Hydrolysates aus 76 Teilen Phenyltrichlorsilan und 40 Teilen Dimethyldichlorsilan mit 4% Si-gebundenen Hydroxylgruppen, dann mit 40 Teilen eines pyrogen erzeugten Siliciumdioxyds mit einer Oberfläche von 150 $m^2/g$ und schließlich mit einem gefällten Siliciumdioxyd mit einer Oberfläche von 130 $m^2/g$ vermischt.

b) 40 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer im Brabender-Plastograph bei 25° C und 60 Umdrehungen je Minute bestimmten Plastizität von 6125 J werden in einem bei 130° C betriebenen Kneter mit 60 Teilen eines durch Trimethylsiloxygruppen endblockierten Diorganopolysiloxans aus 99,5 Molprozent Dimethylsiloxaneinheiten und 0,5 Molprozent Vinylmethylsiloxaneinheiten mit einer im Brabender-Plastograph bei 25° C und 60 Umdrehungen je Minute bestimmten Plastizität von 7840 J, 5 Teilen eines in den endständigen Einheiten je eine Si-gebundene Hydroxylgruppe aufweisenden Diorganopolysiloxans aus etwa 50 Molprozent Dimethylsiloxaneinheiten und etwa 50 Molprozent Vinylmethylsiloxaneinheiten mit einer Viskosität von 10 000 mPa · s bei 25° C, 2 Teilen

Diphenylsilandiol, 3 Teilen eines in den endständigen Einheiten je eine Si-gebundene Hydroxylgruppe aufweisenden Diorganopolysiloxans aus 75 Molprozent Dimethylsiloxaneinheiten und 25 Molprozent Vinylmethylsiloxaneinheiten mit 3,8% Hydroxylgruppen und 48 Teilen eines pyrogen erzeugten Siliciumdioxyds mit einer Oberfläche von 150 $m^2/g$ vermischt.

Die gemäß a) und b) hergestellten Mischungen werden im Gewichtsverhältnis von 1 : 1 miteinander vermischt. In 100 Teile des so erhaltenen Gemisches werden zunächst 2 Teile einer Paste (Hitzestabilisator) aus 50% Ruß und 50% eines durch Trimethylsiloxygruppen endblockierten Diorganopolysiloxanes aus 99,8 Molprozent Dimethylsiloxaneinheiten und 0,2 Molprozent Vinylmethylsiloxaneinheiten, dann 2 Teile mit Organosiliciumverbindungen hydrophobiertes Calciumhydroxyd und schließlich 4 Teile einer Paste aus gleichen Teilen Bis-(2,4-dichlorbenzoyl)-peroxyd und eine Viskosität von 250 mPa · s bei aufweisendem, durch Trimethylsiloxygruppen endblockiertem Dimethylpolysiloxan eingemischt. Kupferdraht wird mit einer Probe der so erhaltenen Masse umgeben, worauf die Masse auf dem Kupferdraht durch 20 Sekunden Erwärmen auf 350°C zum Elastomeren vernetzt wird. 10 cm lange Stücke des so erhaltenen, mit einem Organopolysiloxanelastomer isolierten Kupferdrahtes werden nach Bestimmung von Zugfestigkeit und Bruchdehnung der Isolierung in 12 cm lange Glasrohre eingeschmolzen, deren lichte Weite 1 mm größer ist als der Durchmesser des Drahts einschließlich Isolierung, und die Glasrohre werden 7 bzw. 14 bzw. 28 bzw. 56 Tage auf 150°C erwärmt, wonach Zugfestigkeit und Bruchdehnung der Isolierung erneut gemessen werden.

### Vergleichsversuch c

Die in Beispiel 3 beschriebene Arbeitsweise wird wiederholt mit der Abänderung, daß 2 Teile Magnesiumoxyd anstelle der 2 Teile von mit Organosiliciumverbindungen hydrophobiertem Calciumhydroxyd eingesetzt werden.

### Vergleichsversuch d

Die in Beispiel 3 beschriebene Arbeitsweise wird wiederholt mit der Abänderung, daß 2 Teile Zinkoxyd anstelle der 2 Teile von mit Organosiliciumverbindungen hydrophobiertem Calciumhydroxyd eingesetzt werden.

### Vergleichsversuch e

Die in Beispiel 3 beschriebene Arbeitsweise wird wiederholt mit der Abänderung, daß kein mit Organosiliciumverbindungen hydrophobiertes Calciumhydroxyd eingesetzt wird.

Die Ergebnisse von Beispiel 3, Vergleichsversuch c, Vergleichsversuch d und Vergleichsversuch e sind in Tabelle III angegeben.

Tabelle III

| | Zugfestigkeit N/mm² | | | | | Bruchdehnung % | | | | |
|---|---|---|---|---|---|---|---|---|---|---|
| | 1) | 2) | 3) | 4) | 5) | 1) | 2) | 3) | 4) | 5) |
| Beispiel 3 | 63 | 61 | 52 | 41 | 39 | 260 | 200 | 180 | 180 | 170 |
| Vergleichsversuch c | 65 | 42 | 56 | 50 | 33 | 190 | 150 | 150 | 120 | 120 |
| Vergleichsversuch d | 63 | 30 | 21 | 16 | 6) | 180 | 40 | 20 | 20 | 6) |
| Vergleichsversuch e | 65 | 9 | 13 | 26 | 6) | 250 | 80 | 50 | 50 | 6) |

1) vor dem Erwärmen im Glasrohr.

2) nach dem 7 Tage Erwärmen im Glasrohr.

3) nach dem 14 Tage Erwärmen im Glasrohr.

4) nach dem 28 Tage Erwärmen im Glasrohr.

5) nach dem 56 Tage Erwärmen im Glasrohr.

6) nicht bestimmt.

Beispiel 4

95 Teile des durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa · s werden zunächst mit 5 Teilen eines Diorganopolysiloxans aus 75 Molprozent Dimethylsiloxaneinheiten und 25 Molprozent Vinylmethylsiloxaneinheiten, dessen endständige Einheiten zu 40 Gewichtsprozent je eine Si-gebundene Hydroxylgruppe aufweisen, während der Rest dieses Diorganopolysiloxans durch Trimethylsiloxygruppen endblockiert ist, dann mit 20 Teilen pyrogen erzeugtem Siliciumdioxyd mit einer Oberfläche von 200 m²/g, die mittels Trimethylchlorsilan hydrophobiert ist, dann mit 20 Teilen hydrophilem, pyrogen erzeugtem Siliciumdioxyd mit einer Oberfläche von 200 m²/g, dann mit 6 Teilen eines in den endständigen Einheiten je eine Si-gebundene Hydroxylgruppe aufweisenden Dimethylpolysiloxans mit 20 mPa · s bei 25°C und schließlich mit 0,5 Teilen Vinyltriäthoxysilan in einem bei Raumtemperatur betriebenen Kneter vermischt. Die so erhaltene Mischung wird innerhalb von 2 Stunden bei 100°C im Stickstoffstrom von flüchtigen Bestandteilen befreit. Dann werden in 100 Teile der von flüchtigen Bestandteilen befreiten Mischung zunächst 8 Teile mit Organosiliciumverbindungen hydrophobiertes Calciumhydroxyd und dann 0,6 Teile 95%iges Dicumylperoxyd eingemischt. Die so erhaltene Mischung wird durch 15 Minuten Erwärmen auf 165°C zu einem Elastomeren vernetzt, das dann 4 Stunden auf 200°C an der Luft erwärmt und schließlich zur Prüfung auf Ölbeständigkeit in ASTM-Öl Nr. 2 14 Tage auf 150°C erwärmt wird. Die Ergebnisse sind in Tabelle IV angegeben.

Vergleichsversuch f

Die in Beispiel 4 beschriebene Arbeitsweise wird wiederholt mit der Abänderung, daß

1) 8 Teile Calciumcarbonat bzw.
2) 8 Teile Magnesiumoxyd bzw.
3) 2 Teile Cerdioxyd bzw.
4) 4 Teile pyrogen erzeugtes Titandioxyd bzw.
5) 2 Teile Bariumperoxyd bzw.
6) 8 Teile Zinkoxyd

anstelle der 8 Teile von mit Organosiliciumverbindungen hydrophobiertem Calciumhydroxyd eingesetzt werden. Die Ergebnisse sind ebenfalls in Tabelle IV angegeben.

Tabelle IV

| | Shore-A-Härte | Δ Shore-A-Härte | Zugfestigkeit $N/mm^2$ | | Bruchdehnung % | | Druckverformungsrest % | Δ G |
|---|---|---|---|---|---|---|---|---|
| | | | 1) | 2) | 1) | 2) | 1) | |
| Beispiel 4 | 51 | −10 | 8,2 | 6,2 | 820 | 705 | 16 | + 6,9 |
| Vergleichsversuch f | | | | | | | | |
| $CaCO_3$ | 51 | −20 | 9,2 | 8,4 | 800 | 195 | 42 | +13,7 |
| MgO | 57 | −16 | 8,6 | 6,3 | 730 | 660 | 30 | + 7,4 |
| $CeO_2$ | 49 | −19 | 9,9 | 1,2 | 810 | 305 | 21 | +14,3 |
| $TiO_2$ | 50 | −20 | 8,9 | 0,8 | 790 | 160 | 30 | +12,8 |
| $BaO_2$ | 50 | −19 | 9,7 | 0,9 | 830 | 105 | 28 | +13,4 |
| ZnO | 53 | −17 | 9,1 | 5,9 | 770 | 720 | 28 | + 7,9 |

1) vor dem Erwärmen im Öl.

2) nach dem Erwärmen im Öl.

Δ Shore-A-Härte = Unterschied der Werte der Shore-A-Härte vor und nach dem Erwärmen im Öl.

Δ G = Gewichtsänderung durch Erwärmen im Öl.

**Patentansprüche**

1. Mittels organischer peroxydischer Verbindungen zu Elastomeren vernetzbare Massen auf Grundlage von Diorganopolysiloxan, die durch Behandlung mit Organosiliciumverbindungen hydrophobierte, basische anorganische Feststoffe enthalten, dadurch gekennzeichnet, daß diese Feststoffe mindestens teilweise aus entsprechend hydrophobiertem Calciumhydroxyd bestehen.

2. Massen nach Anspruch 1, dadurch gekennzeichnet, daß sie 0,1 bis 20 Gewichtsprozent, bezogen auf das Gesamtgewicht der jeweiligen Masse, des mit Organosiliciumverbindungen hydrophobierten Calciumhydroxyds enthalten.

**Claims**

1. Compositions, based on diorganopolysiloxanes, which can be cross-linked to form elastomers using organic peroxidic compounds and which contain basic inorganic solid substances rendered hydrophobic by treatment with organosilicon compounds, characterised in that those solid substances consist, at least partially, of calcium hydroxide rendered hydrophobic in a corresponding manner.

2. Compositions according to claim 1, characterised in that they contain from 0.1 to 20% by weight, based on the total weight cf the composition in each case, of the calcium hydroxide rendered hydrophobic using organosilicon compounds.

**Revendications**

1. Matières à base de polydiorganosiloxanes, réticulables en élastomères au moyen de composés peroxydés organiques, qui contiennent des substances solides minérales basiques rendues hydrophobes par traitement par des composés organiques du silicium, caractérisées en ce que ces

substances solides se composent au moins partiellement d'un hydroxyde de calcium convenablement hydrofugé.

2. Matières suivant la revendication 1, caractérisées en ce qu'elles contiennent de 0,1 à 20% en poids, par rapport au poids total de la matière considérée, de l'hydroxyde de calcium rendu hydrophobe par des composés organiques du silicium.